# EUROPEAN PATENT APPLICATION

(11) **EP 1 454 888 A2**
(43) Date of publication of application: **08.09.2004**
(21) Application number: 04100614.9
(22) Date of filing: 16.02.2004
(51) Int. Cl.: C03B 35/18, C21D 9/00, F27D 3/02, C04B 35/195, C04B 35/80, B28B 1/52, C03B 17/06

(54) **Method for producing a disc roll, disc roll and disc member base material**

(30) Priority: 14.02.2004 JP 2003036737; 05.03.2003 JP 2003058845; 17.03.2003 JP 2003071971; 29.01.2004 JP 2004020915
(71) Applicant: NICHIAS CORPORATION, Tokyo (JP)
(72) Inventor: NAKAYAMA, Masaki, Shizuoka (JP); IGO, Masafumi, Tokyo (JP); HORIUCHI, Osamu, Shizuoka (JP)
(74) Representative: Leone, Mario

(57) **Abstract**

The present invention relates to a disc roll comprising a plurality of disc members each containing a crystalline cordierite or each being capable of generating a crystalline cordierite upon conveyance of a high-temperature article therewith. Also disclosed are methods for producing the disc roll and disc member base materials for obtaining the disc members.

## Description

### FIELD OF THE INVENTION

The present invention relates to a disc roll comprising a plurality of annular disc members fitted together on a rotary shaft by insertion to form a conveying surface by peripheral surfaces of the above-mentioned disc members, a method for producing the same, and a disc member base material for obtaining the above-mentioned disc roll.

### BACKGROUND OF THE INVENTION

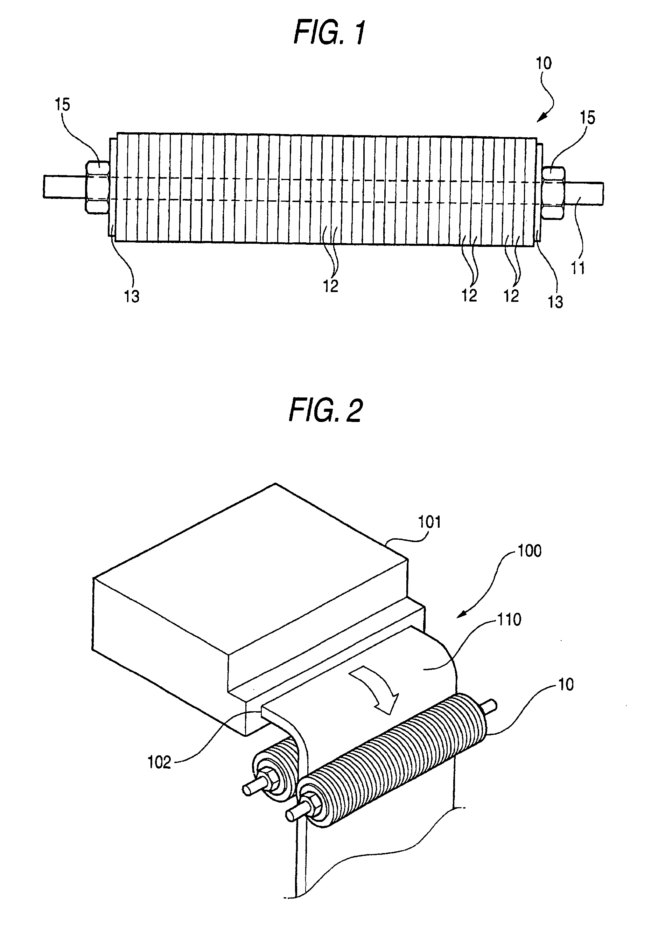

For example, in order to convey plate glass falling from a melting furnace or a metal plate such as stainless steel plate heated in an annealing furnace, a disc roll has been used. Fig. 1 is a schematic view showing one example of a disc roll 10, which is prepared by: stamping out annular discs from a disc member base material, obtained by forming into a plate form having a thickness of about 3 to about 6 mm an aqueous slurry in which an inorganic fiber such as ceramic fiber, inorganic fillers (such as talc, clay and mica), and a binder are compounded; and fitting these plurality of disc members 12 together on a metal shaft 11 acting as a rotary shaft by insertion to form a roll-shaped laminate, and fixed with nuts 15 etc. with the interposition of flanges 13 arranged at both end, with some compression applied to the disc members 12 by pressurizing the whole. Peripheral surfaces of the disc members 12 function as a conveying surface.

The above-mentioned disc roll 10 is integrated, for example, into a plate glass production apparatus 100 shown in Fig. 2, and used for conveyance of plate glass. This plate glass production apparatus 100 is an apparatus for producing plate glass by continuously discharging a glass melt 110 from a linearly opened slit 102 of a melting furnace 101, allowing this discharged strip-shaped glass melt 110 to fall, and cooling it during falling to harden it. The disc roll 10 functions as a pair of stretching rolls, which hold the strip-shaped glass melt 110 therebetween to forcibly send it downwards.

As described above, the disc roll 10 is exposed to a high temperature (about 800°C) close to a melting point of glass, so that the individual disc members 12 become liable to deform or to undergo changes in dimension. Further, such a high temperature sometimes causes "powder omission" that constituent materials of the disc member 12 are deteriorated to become powders, thus dropping out, and the powders which have dropped out adhere to plate glass positioned downstream from the disc roll 10 to lower the yield.

In order to avoid such disadvantages, the disc roll 10 is strongly required to have excellent heat resistance and low thermal deformation ratio, and the present applicant has also previously proposed a disc roll prepared from a disc roll base material comprising wallastonite and ceramic fiber as main components (see patent document 1).

Patent Document 1: JP 9-301765 A

The above-mentioned disc roll according to the present applicant is small in thermal deformation and deterioration even at temperatures as high as 1200°C, and can be suitably used for the production of plate glass. However, the surface temperature of a stainless steel plate treated in an annealing furnace reaches as high as nearly 1300°C. Accordingly, even when the disc roll according to the present applicant is used, it is forced to be exchanged relatively early. It has therefore been desired to further improve heat resistance.

### SUMMARY OF THE INVENTION

The invention has been made in view of such situations.

Therefore, an object of the invention is to provide a disc roll having excellent heat resistance, which can sufficiently deal with conveyance of a metal plate such as a stainless steel plate treated in an annealing furnace, and a disc member base material for obtaining the above-mentioned disc roll.

Further, another object of the invention is to provide a method for efficiently producing the above-mentioned disc roll without causing an increase in costs, using the above-mentioned disc member base material.

Other objects and effects of the invention will become apparent from the following description.

As a result of extensive investigation for attaining the above-mentioned objects, the present inventors found that a disc roll containing crystalline cordierite is markedly small in changes in dimension and texture deterioration even at temperatures as high as 1300°C, compared to conventional rolls, and can be sufficiently used even when a metal plate such as a stainless steal plate is conveyed in an annealing furnace (This is referred to as "first finding" for convenience). Further, the present inventors found that amorphous cordierite is crystallized to crystalline cordierite with conveyance by preparing a disc roll using disc members stamped out from an amorphous cordierite-containing disc member base material, and conveying a high-temperature plate glass or stainless steel plate according to an ordinary type of usage (This is referred to as "second finding" for convenience). The present invention is based on these findings.

Specifically, the above-described objects of the invention have been achieved by the following aspects of the invention.

A first aspect of the invention (hereinafter referred to as "first embodiment") is mainly based on the above-mentioned first finding and relates to the following disc rolls, methods for producing a disc roll, and disc member base materials.
(1A) A disc roll comprising:
   a plurality of annular disc members each defining a hole and having a peripheral surface; and
   a rotary shaft fitted into the holes of said annular disc members by insertion, whereby the peripheral surfaces of said disc members serve as a conveying surface of the disc roll,
   wherein said disc members contain a crystalline cordierite-containing ceramic powder, an inorganic fiber and a binder.
(2A) The disc roll according to item (1A) above, wherein said disc members contain the crystalline cordierite-containing ceramic powder, the inorganic fiber and the binder in amounts of 20 to 80% by weight, 5 to 50% by weight and 5 to 40% by weight, respectively, based on the total weight of the disc members.
(3A) A method for producing a disc roll, comprising the steps of:
   forming into a plate form a slurry raw material containing a crystalline cordierite-containing ceramic powder, an inorganic fiber and a binder to obtain a disc member base material;
   stamping out a plurality of annular disc members each defining a hole and having a peripheral surface, from said disc member base material; and
   fitting said plurality of annular disc members on a rotary shaft by insertion through the holes and fixing said disc members to obtain a disc roll.
(4A) The method for producing a disc roll according to item (3A) above, wherein said formation of the disc member base material is conducted by a paper-making process.
(5A) A plate-shaped disc member base material, comprising a crystalline cordierite-containing ceramic powder, an inorganic fiber and a binder.
(6A) The disc member base material according to item (5A) above, containing the crystalline cordierite-containing ceramic powder, the inorganic fiber and the binder in amounts of 20 to 80% by weight, 5 to 50% by weight and 5 to 40% by weight, respectively, based on the weight of the disc member base material.

A second aspect of the invention (hereinafter referred to as "second embodiment") is mainly based on the above-mentioned second finding and relates to the following disc rolls, methods for producing a disc roll, and disc member base materials.
(1B) A disc roll comprising:
   a plurality of annular disc members each defining a hole and having a peripheral surface; and
   a rotary shaft fitted into the holes of said annular disc members by insertion, whereby the peripheral surfaces of said disc members serve as a conveying surface of the disc roll,
   wherein said disc members contain an inorganic fiber and an amorphous cordierite.
(2B) The disc roll according to item (1B) above, wherein said disc members contain the inorganic fiber and the amorphous cordierite in amounts of 5 to 50% by weight and 20 to 80% by weight, respectively, based on the total amount of the disc members.
(3B) The disc roll according to item (1B) or (2B) above, wherein the amorphous cordierite is partly replaced by a synthetic cordierite.
(4B) The disc roll according to item (3B) above, wherein said disc members contain the amorphous cordierite and the synthetic cordierite in a mixing ratio of the former to the latter of 12:1 to 3:10 by weight.
(5B) The disc roll according to any one of items (1B) to (4B) above, wherein said disc members comprises a crystallized product of the amorphous cordierite exists at least in their surface layer portions.
(6B) A method for producing a disc roll, comprising the steps of:
   forming into a plate form a slurry raw material containing an inorganic fiber and an amorphous cordierite to obtain a disc member base material;
   stamping out a plurality of annular disc members each defining a hole and having a peripheral surface, from said disc member base material; and
   fitting said plurality of annular disc members on a rotary shaft by insertion through the holes and fixing said disc members to obtain a disc roll.
(7B) The method for producing the disc roll according to item (6B) above,
   wherein said slurry raw material further contains a synthetic cordierite.
(8B) The method for producing a disc roll according to item (6B) or (7B) above, wherein said slurry raw material further contains an organic fiber and an organic binder, and said formation of the disc member base material is conducted by a paper-making process.
(9B) The method for producing a disc roll according to any one of items (6B) to (8B) above, further comprising a step of crystallizing the amorphous cordierite existing at least in surface layer portions of the peripheral surfaces of said disc members by conveying a high temperature article with the disc roll.
(10B) A plate-shaped disc member base material, comprising an inorganic fiber and an amorphous cordierite.
(11B) The disc member base material according to item (10B) above, containing the inorganic fiber and the amorphous cordierite in amounts of 5 to 50% by weight and 20 to 80% by weight, respectively, based on the weight of the disc member base material.
(12B) The disc member base material according to item (10B) or (11B) above, the amorphous cordierite is partly replaced by a synthetic cordierite.

A third aspect of the invention (hereinafter referred to as "third embodiment") is mainly based on the above-mentioned first finding and relates to the following disc rolls, methods for producing a disc roll, and disc member base materials.
(1C) A disc roll comprising:
   a plurality of annular disc members each defining a hole and having a peripheral surface; and
   a rotary shaft fitted into the holes of said annular disc members by insertion, whereby the peripheral surfaces of said disc members serve as a conveying surface of the disc roll,
   wherein said disc members contain:
   a mixture comprising a magnesium oxide source, an aluminum oxide source and a silicon oxide source in a weight ratio of 2:2:5; and
   an inorganic fiber.
(2C) The disc roll according to item (1C) above, wherein said disc members contain the mixture and the inorganic fiber in amounts of 20 to 80% by weight and 5 to 50% by weight, respectively, based on the total weight of the disc members.
(3C) A method for producing a disc roll, comprising the steps of:
   forming into a plate form a slurry raw material containing a mixture comprising a magnesium oxide source, an aluminum oxide source and a silicon oxide source in a weight ratio of 2:2:5 and an inorganic fiber to obtain a disc member base material;
   heating said disc member base material to crystallize the mixture;
   stamping out a plurality of annular disc members each defining a hole and having a peripheral surface, from said crystallized disc member base material; and
   fitting said plurality of annular disc members on a rotary shaft by insertion through the holes and fixing said disc members to obtain a disc roll.
(4C) The method for producing the disc roll according to item (3C) above, wherein said slurry raw material further contains an organic fiber and an organic binder, and said formation of the disc member base material is conducted by a paper-making process.
(5C) A plate-shaped disc member base material, containing:
   a mixture comprising a magnesium oxide source, an aluminum oxide source and a silicon oxide source in a weight ratio of 2:2:5; and
   an inorganic fiber.
(6C) The disc member base material according to item (5C) above, containing the mixture and the inorganic fiber in amounts of 20 to 80% by weight and 5 to 50% by weight, respectively, based on the weight of the disc member base material.

### BRIEF DESCRIPTION OF THE DRAWINGS

Fig. 1 is a schematic view showing one example of a disc roll of the invention.
Fig. 2 is a schematic view showing one example of the way of using the disc roll shown in Fig. 1 (a plate glass production apparatus).
Fig. 3 is a graph for illustrating expansion and contraction in heating an amorphous cordierite-containing disc member.

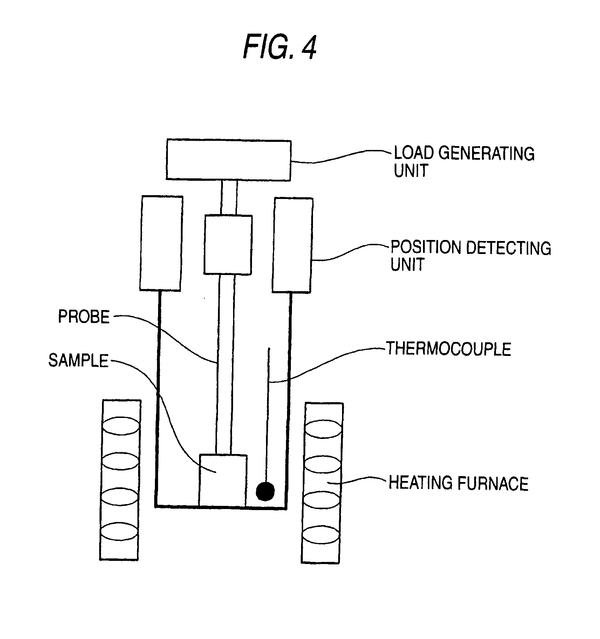

Fig. 4 is a schematic view showing an apparatus used in the Examples for measuring the maximum percentage of contraction in softening.

The reference numerals used in the drawings represent the followings, respectively.
10: Disc Roll
11: Metal Shaft
12: Disc member
13: Flange
15: Nut
100: Plate Glass Production Apparatus
101: Melting Furnace
102: Slit
110: Strip-Shaped Glass Melt

### DETAILED DESCRIPTION OF THE INVENTION

The present invention is described in more detail below.

### First Embodiment

First, the disc member base material of the first embodiment is described below. Main components thereof are a crystalline cordierite-containing ceramic powder, an inorganic fiber and a binder. The crystalline cordierite-containing ceramic powder is obtained by heating a mixture in which a magnesium oxide source, an aluminum oxide source and a silicon oxide source are compounded in a magnesium oxide source-aluminum oxide source-silicon oxide source ratio of 2:2:5 corresponding to the composition of crystalline cordierite (2MgO·2Al₂O₃·5SiO₂), at a temperature equal to or higher than 1350°C, the crystallization temperature at which a crystalline cordierite is formed. Further, this crystalline cordierite-containing ceramic powder is also called "synthetic cordierite", and referred to as synthetic cordierite in the subsequent description.

Examples of the above-mentioned mixtures include, for example, one obtained by mixing 28 parts by weight of talc, 47 parts by weight of kaolin clay and 35 parts by weight of aluminum oxide, and pulverizing the resulting mixture to an average particle size of about 0.5 µm with a ball mill. Such components are also available from the market, for example, as "SD55" manufactured by Fuji Talc Ind. Co., Ltd. for talc, "Glomax LL" manufactured by Tsuchiya Kaolin Industry Co., Ltd. for kaolin clay, and "Alumina Powder A-42-2" manufactured by Showa Aluminum Corp. for aluminum oxide, respectively. Further, the synthetic cordierite is also available from the market, for example, as "Synthetic Cordierite SS species" manufactured by Marusu Yuuyaku Goshi Kaisha.

As the inorganic fiber, a variety of inorganic fibers which has hitherto been used for disc rolls can be appropriately used, and examples thereof include ceramic fiber, mullite fiber, alumina fiber, silica fiber, silica-alumina fiber, etc. The alumina fiber, mullite fiber, silica-alumina fiber and silica fiber which are excellent in heat resistance are suitable among others. Further, the inorganic fibers can be used as a combination of two or more thereof as needed.

The binder is preferably a silica sol, an alumina sol or the like because of its excellent heat resistance.

In addition to the above-mentioned synthetic cordierite, inorganic fiber and binder, various materials, which have hitherto been used in disc rolls, can be incorporated into the disc member base material of the first embodiment as needed. For example, the disc member base material of the first embodiment is obtained from aqueous slurry containing the above-mentioned synthetic cordierite, inorganic fiber and binder by mold forming such as vacuum dehydration forming using a forming die or by a known paper-making process using a papermaking machine such as cylinder machine. In respect to cost, the paper-making process is advantageous. In order to improve paper-making properties, shape retaining properties, etc., it is preferred that a coagulant aid, an organic fiber, an organic binder, etc. are incorporated. All of these may be any as long as they are ones, which have hitherto been used in preparing base materials for disc rolls. A montmorillonite powder etc. can be used as the coagulant aid, pulp etc. can be used as the organic fiber, and an aqueous starch solution etc. can be used as the organic binder. The mold forming necessitates no coagulant aid and no organic fiber.

The content of the synthetic cordierite in the disc member base material is preferably from 20 to 80% by weight based on the whole amount of the base material. When the content of the synthetic cordierite is less than 20% by weight, it becomes difficult to obtain the desired improvement of heat resistance. Exceeding 80% by weight results in a relative decrease in the compounding ratio of the inorganic fiber to cause the possibility of an excessive decrease in strength. In order to stably express the surface hardness etc. of a completed roll, it is more preferably from 40 to 60% by weight based on the whole amount of the base material. Further, the content of the inorganic fiber is preferably from 5 to 50% by weight based on the whole amount of the base material. When the content of the inorganic fiber is less than 5% by weight, the strength may sometime become insufficient. When it exceeds 50% by weight, the content of the synthetic cordierite relatively decreases, which may sometime result in failure to exhibit the effect of improving heat resistance. Considering the surface hardness of the completed roll, it is also more preferably from 20 to 30% by weight based on the whole amount of the base material. The content of the binder is an amount by which the synthetic cordierite and the inorganic fiber can be maintained as a formed article. Taking into consideration the above-mentioned respective contents of the synthetic cordierite and the inorganic fiber, it is preferably from 5 to 40% by weight. In view of the surface hardness of the completed roll, it is also more preferably from 5 to 20% by weight.

Further, the compounding ratios of the other components described above can be appropriately set as needed within the range not impairing the desired effect of the invention. The amount of the coagulant aid is suitably 3% by weight or less, the amount of the organic fiber is suitably 10% by weight or less, and the amount of the organic binder is suitably 5% by weight or less.

As a method for obtaining the disc member base material, the use of the paper-making process is efficient and preferred. That is to say, an aqueous slurry is prepared which contains the synthetic cordierite and the inorganic fiber, and further the coagulant aid, the organic fiber, the organic binder, etc. as needed, in specified amounts, and this aqueous slurry is formed into a plate form with a paper-making machine and dried, thereby being able to obtain the disc member base material. The thickness of disc member base material can be appropriately set, may be similar to that of conventional one, and is generally from 2 to 10 mm.

Then, the method for producing the disc roll of the first embodiment is described below. The production method is basically conducted in accordance with a conventional method, and described again with reference to Fig. 1. First, annular disc members 12 are stamped out from the disc member base material of the first embodiment described above, and these plurality of disc members 12 are fitted together on a rotary shaft 11 made of metal (for example, made of iron) by insertion to form a roll-shaped laminate. Then, they are fixed with nuts 15 etc. with the interposition of flanges 13 arranged at both ends, with some compression applied from both ends to the disc members 12 by pressurizing the whole. Then, peripheral surfaces of the disc members 12 are ground so as to give a specified roll diameter. Further, a conveying surface is smoothened by this grinding.

The disc roll of the first embodiment thus obtained contains the crystalline cordierite, and therefore has advantages such as excellent heat resistance and long life, compared to conventional disc rolls. That is to say, the crystalline cordierite has the advantage that the thermal expansion coefficient is as low as 0.7 x 10⁻⁶ to 1.5 x 10⁻⁶/°C, compared to conventional disc roll materials, leading to high thermal shock resistance, namely excellent spalling resistance. Further, chemical stability is high, and reactivity with a high-temperature glass or stainless steel plate is low. As described above, the disc roll is required to be small in deformation and changes in dimension at high temperatures, and little in thermal deterioration, which induces powder omission. The crystalline cordierite is excellent in spalling resistance, compared to conventional disc rolls, so that it is sufficiently usable even at temperatures as high as 1300°C, such as the case of conveyance of the stainless steal. Moreover, the high-temperature stainless steal plate is liable to produce iron oxide on a surface thereof. However, the crystalline cordierite is low in reactivity, so that damage of the roll surface caused by this iron oxide is little, resulting in long life.

### Second Embodiment

First, the disc member base material of the second embodiment is described below. Main components thereof are an amorphous cordierite and an inorganic fiber. The amorphous cordierite is a precursor of crystalline cordierite, whose composition is 2MgO·2Al₂O₃·5SiO₂ identical to the composition of the crystalline cordierite, and which is turned into the crystalline cordierite by crystallization. This amorphous cordierite is a powder obtained by compounding raw materials such as metal oxides, ceramics and minerals so as to give the above-mentioned cordierite composition ratio, then, burning (melting) the resulting mixture at a specified temperature, and pulverizing it, for example, with a pulverizer such as an alumina ball mill after rapid cooling. The amorphous cordierite is also available from the market as "14-3635P" manufactured by Ferro Enamels (Japan) Limited, etc.

As the inorganic fiber, a variety of inorganic fibers which have hitherto been used for disc rolls can be appropriately used, and examples thereof include ceramic fiber, mullite fiber, alumina fiber, silica fiber, silica-alumina fiber, etc. The alumina fiber, mullite fiber, silica-alumina fiber and silica fiber, which are excellent in heat resistance, are suitable among others. Further, the inorganic fibers can be used as a combination of two or more thereof as needed.

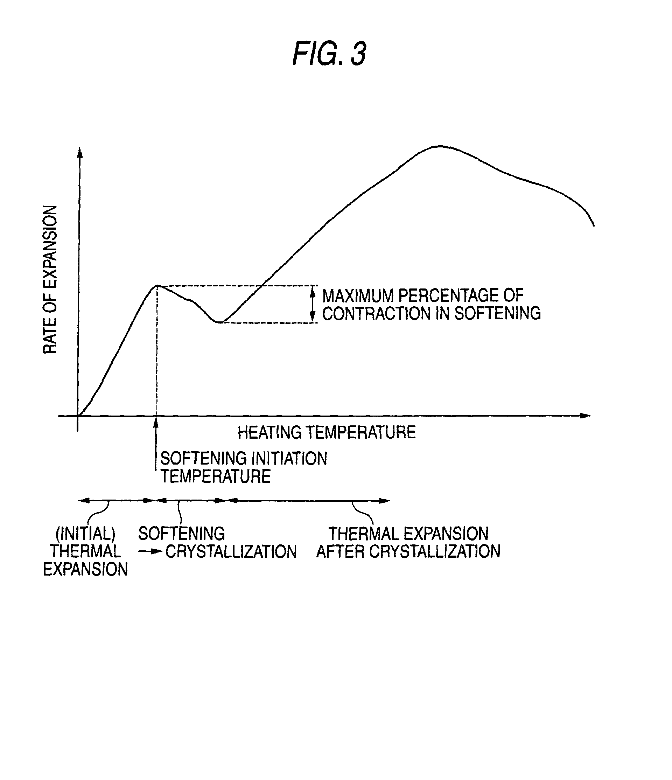

The disc member base material of the second embodiment contains the amorphous cordierite and the inorganic fiber as indispensable components, but may further contain synthetic cordierite illustrated below. As shown in Fig. 3, the disc member base material containing the amorphous cordierite initiates initial thermal expansion by heating. When it reaches the softening initiation temperature, it contracts to be crystallized, and when crystallization is completed, it initiates thermal expansion again. The contraction in softening and crystallization (the maximum percentage of contraction in softening) exerts a significant effect on dimensional changes as the disc member or thermals stress. In order to hold down the maximum percentage of contraction in softening, it becomes effective to contain the synthetic cordierite that has already been crystallized. The synthetic cordierite functions as an assistant for crystallization of the amorphous cordierite to enhance the rate of crystallization, thereby rapidly terminating an unstable crystallization process. The synthetic cordierite has therefore the effect of minimizing defects such as softening, which occurs in crystallization. Further, the amorphous cordierite does not have a complete cordierite composition. Accordingly, when it is used alone, a crystallized product thereof includes impurities, which causes the strain of a crystal structure in some cases. However, the synthetic cordierite functions as a seed crystal to decrease the strain of the crystal structure, thereby effectively expressing heat resistance and low thermal expansibility, the original properties of cordierite, and further being able to stably improve the performance. The synthetic cordierite is the equivalent of one obtained by crystallizing the amorphous cordierite, and does not impair the effect of the invention at all.

The synthetic cordierite is crystalline cordierite obtained by heating a mixture in which a magnesium oxide source, an aluminum oxide source and a silicon oxide source are compounded in a magnesium oxide source-aluminum oxide source-silicon oxide source ratio of 2:2:5 to correspond to the composition of cordierite (2MgO·2Al₂O₃·5SiO₂), at a temperature equal to or higher than its crystallization temperature of 1350°C. Examples of the above-mentioned mixture include, for example, one obtained by mixing 28 parts by weight of talc, 47 parts by weight of kaolin clay and 35 parts by weight of aluminum oxide, and pulverizing the resulting mixture to an average particle size of about 0.5 µm with a ball mill. Further, in this mixture, talc is also available from the market as "SD55" manufactured by Fuji Talc Ind. Co., Ltd., kaolin clay as "Glomax LL" manufactured by Tsuchiya Kaolin Industry Co., Ltd., and aluminum oxide as "Alumina Powder A-42-2" manufactured by Showa Aluminum Corp., respectively. Further, the synthetic cordierite is also available from the market, for example, as "Synthetic Cordierite SS species" manufactured by Marusu Yuuyaku Goshi Kaisha.

Besides, various materials, which have hitherto been used in disc rolls, can be incorporated into the disc member base material of the second embodiment as needed. For example, the disc member base material of the second embodiment is obtained from an aqueous slurry containing the amorphous cordierite and the inorganic fiber, and further the synthetic cordierite as needed, by mold forming such as vacuum dehydration forming using a forming die or by a known paper-making process using a papermaking machine such as cylinder machine. In respect to cost, the paper-making process is advantageous. In order to improve paper-making properties, shape retaining properties, etc. in the paper-making process, it is preferred that a coagulant aid, an organic fiber, an organic binder, etc. are incorporated. All of these may be any as long as they are ones, which have hitherto been used in preparing base materials for disc rolls by the paper-making process. A montmorillonite powder etc. can be used as the coagulant aid, pulp etc. can be used as the organic fiber, and an aqueous starch solution etc. can be used as the organic binder. The mold forming necessitates no coagulant aid and no organic fiber.

In the composition of the disc member base material, the content of the amorphous cordierite is preferably from 20 to 80% by weight based on the whole amount of the base material. When the content of the amorphous cordierite is less than 20% by weight, it may sometime become difficult to obtain the desired improvement of heat resistance. Exceeding 80% by weight results in a relative decrease in the compounding ratio of the inorganic fiber to cause the possibility of an excessive decrease in strength. Further, the content of the inorganic fiber is preferably from 5 to 50% by weight based on the whole amount of the base material. When the content of the inorganic fiber is less than 5% by weight, the strength may sometime become insufficient. When it exceeds 50% by weight, the content of the synthetic cordierite relatively decreases, which may sometime result in failure to exhibit the effect of improving heat resistance.

The synthetic cordierite is one by which the amorphous cordierite is partly replaced. In that case, the amorphous cordierite-synthetic cordierite mixing ratio is preferably from 12:1 to 3:10, more preferably from 11:2 to 3:10, and particularly preferably from 9:4 to 5:8. When the ratio of the synthetic cordierite is less than the above-mentioned value, the synthetic cordierite does not fully function as the assistant in crystallization as described above, which may cause failure to crystallize the whole base material. On the other hand, when the ratio of the synthetic cordierite is more than the above-mentioned value, the amount of the amorphous cordierite is too small to obtain the binder effect, resulting in a fear of failing to obtain the desired strength. The above-mentioned maximum percentage of contraction in softening can be decreased with an increase in the ratio of the synthetic cordierite.

Further, the compounding ratios of the other components described above can be appropriately set as needed within the range not impairing the desired effect of the invention. The amount of the coagulant aid is suitably 3% by weight or less, the amount of the organic fiber is suitably 10% by weight or less, and the amount of the organic binder is suitably 5% by weight or less.

As a method for obtaining the disc member base material, the use of the paper-making process is efficient and preferred. That is to say, an aqueous slurry is prepared which contains the amorphous cordierite and the inorganic fiber, and further the coagulant aid, the organic fiber, the organic binder, etc. as needed, in specified amounts, and this aqueous slurry is formed into a plate form with a paper-making machine and dried, thereby being able to obtain the disc member base material. The thickness of disc member base material can be appropriately set, may be similar to that of conventional one, and is generally from 2 to 10 mm.

Then, the method for producing the disc roll of the second embodiment is described below. The production method is basically conducted in accordance with a conventional method, and described again with reference to Fig. 1. First, annular disc members 12 are stamped out from the disc member base material of the second embodiment described above, and these plurality of disc members 12 are fitted together on a rotary shaft 11 made of metal (for example, made of iron) by insertion to form a roll-shaped laminate. Then, they are fixed with nuts 15 etc. with the interposition of flanges 13 arranged at both ends, with some compression applied from both ends to the disc members 12 by pressurizing the whole. Then, peripheral surfaces of the disc members 12 are ground so as to give a specified roll diameter. Further, a conveying surface is smoothened by this grinding.

Although the disc roll of the second embodiment is constituted as described above, it is preferred that the amorphous cordierite existing at least in surface layer portions of the peripheral surfaces of the disc members 12 is crystallized by further heating a roll surface of the above-mentioned disc roll. This crystallized product, i.e., the crystalline cordierite has the advantage that the thermal expansion coefficient is as low as 0.7x10⁻⁶ to 1.5x10⁻⁶/°C, compared to conventional disc roll materials, leading to high thermal shock resistance, namely excellent spalling resistance. Further, chemical stability is high, and reactivity with a high-temperature glass or stainless steel plate is low. As described above, the disc roll is required to be small in deformation and changes in dimension at high temperatures, and little in thermal deterioration, which induces powder omission. The crystalline cordierite is excellent in spalling resistance, compared to conventional disc rolls, so that it is sufficiently usable even at temperatures as high as 1300°C, such as the case of conveyance of the stainless steal. Moreover, the high-temperature stainless steal plate is liable to produce iron oxide on a surface thereof. However, the crystalline cordierite is low in reactivity, so that damage of the roll surface caused by this iron oxide is little, resulting in long life.

Here, when heated at a temperature of about 800°C to about 1300°C, the amorphous cordierite is crystallized to form the crystalline cordierite. With respect to this, the strip-shaped glass melt 110 is treated in a high-temperature atmosphere of about 900°C, and the stainless plate is also treated in a high-temperature atmosphere of about 1300°C, so that the above-mentioned crystallization can be conducted by using the disc roll prepared as described above and conveying the strip-shaped glass melt 110, the stainless plate or the like according to an ordinary type of usage. Accordingly, no new production process and production apparatus for crystallization are required, which causes no increase in costs relating to production. Further, there is the advantage that the crystallization of the amorphous cordierite gradually proceeds into the inside (inner diameter side) of the disc materials 12 with use to provide a stronger disc roll.

### Third Embodiment

First, the disc member base material of the third embodiment is described below. Main components thereof are a mixture in which a magnesium oxide source, an aluminum oxide source and a silicon oxide source are compounded in a magnesium oxide source-aluminum oxide source-silicon oxide source ratio of 2:2:5, and an inorganic fiber. The compounding ratio of the mixture corresponds to the composition of crystalline cordierite (2MgO·2Al₂O₃·5SiO₂), and crystalline cordierite is obtained by crystallizing this mixture. This mixture is referred to as "compounded cordierite" in the subsequent description.

Specific examples of the compounded cordierite include one obtained by mixing 28 parts by weight of talc, 47 parts by weight of kaolin clay and 35 parts by weight of alumina, and pulverizing the resulting mixture to an average particle size of about 0.5 µm with a ball mill. Further, the compounded cordierite is also available from the market. For example, "Compounded Cordierite AF-2" manufactured by Marusu Yuuyaku Goshi Kaisha can be used.

As the inorganic fiber, a variety of inorganic fibers which have hitherto been used for disc rolls can be appropriately used, and examples thereof include ceramic fiber, mullite fiber, alumina fiber, silica fiber, silica-alumina fiber, etc. The alumina fiber, mullite fiber, silica-alumina fiber and silica fiber, which are excellent in heat resistance, are suitable among others. Further, the inorganic fibers can be used as a combination of two or more thereof as needed.

The disc member base material of the third embodiment contains the compounded cordierite and the inorganic fiber as indispensable components. However, various materials, which have hitherto been used in disc rolls, can be incorporated as needed. For example, the disc member base material of the third embodiment is obtained from aqueous slurry containing the compounded cordierite and the inorganic fiber by mold forming such as vacuum dehydration forming using a forming die or by a known paper-making process using a papermaking machine such as cylinder machine. In respect to cost, the paper-making process is advantageous. In order to improve paper-making properties, shape retaining properties, etc., it is preferred that a coagulant aid, an organic fiber, an organic binder, etc. are incorporated. All of these may be any as long as they are ones, which have hitherto been used in preparing base materials for disc rolls. A montmorillonite powder etc. can be used as the coagulant aid, pulp etc. can be used as the organic fiber, and an aqueous starch solution etc. can be used as the organic binder. The mold forming necessitates no coagulant aid and no organic fiber.

The content of the compounded cordierite in the disc member base material is preferably from 20 to 80% by weight based on the whole amount of the base material. In order to stably express the surface hardness etc. of a completed roll, it is more preferably from 50 to 75% by weight based on the whole amount of the base material. When the content of the compounded cordierite is less than 20% by weight, it may sometime become difficult to obtain the desired improvement of heat resistance. Exceeding 80% by weight results in a relative decrease in the compounding ratio of the inorganic fiber to cause the possibility of an excessive decrease in strength. Further, the content of the inorganic fiber is preferably from 5 to 50% by weight based on the whole amount of the base material. Similarly, considering the surface hardness of the completed roll, it is more preferably from 20 to 30% by weight based on the whole amount of the base material. When the content of the inorganic fiber is less than 5% by weight, the strength may sometime become insufficient. When it exceeds 50% by weight, the content of the compounded cordierite relatively decreases, which may sometime result in failure to exhibit the effect of improving heat resistance.

Further, the compounding ratios of the other components described above can be appropriately set as needed within the range not impairing the desired effect of the invention. The amount of the coagulant aid is suitably 3% by weight or less, the amount of the organic fiber is suitably 10% by weight or less, and the amount of the organic binder is suitably 5% by weight or less.

As a method for obtaining the disc member base material, the use of the paper-making process is efficient and preferred. That is to say, an aqueous slurry is prepared which contains the compounded cordierite and the inorganic fiber, and further the coagulant aid, the organic fiber, the organic binder, etc. as needed, in specified amounts, and this aqueous slurry is formed into a plate form with a paper-making machine and dried, thereby being able to obtain the disc member base material. The thickness of disc member base material can be appropriately set, may be similar to that of conventional one, and is generally from 2 to 10 mm.

Then, the method for producing the disc roll of the third embodiment is described below. The production method is basically conducted in accordance with a conventional method. However, first, the disc member base material of the third embodiment described above is heated to crystallize the crystalline cordierite. As for the heating conditions, the heating temperature varies depending on the content of the crystalline cordierite in the disc member base material and the thickness of the base material. However, the heating temperature is required to be equal to or higher than 1350°C, the temperature at which the crystalline cordierite is formed. The subsequent production processes are similar to conventional ones, and described again with reference to Fig. 1. Annular disc members 12 are stamped out from the disc member base material, and these plurality of disc members 12 are fitted together on a shaft 11 made of metal (for example, made of iron) by insertion to form a roll-shaped laminate. Then, they are fixed with nuts 15 etc. with the interposition of flanges 13 arranged at both ends, with some compression applied to the disc members 12 by pressurizing the whole. Then, peripheral surfaces of the disc members 12 are ground so as to give a specified roll diameter. Further, a conveying surface is smoothened by this grinding.

The disc roll of the third embodiment thus obtained contains the crystalline cordierite, and therefore has advantages such as excellent heat resistance and long life, compared to conventional disc rolls. That is to say, the crystalline cordierite has the advantage that the thermal expansion coefficient is as low as 0.7×10⁻⁶ to 1.5×10⁻⁶/°C, compared to conventional disc roll materials, leading to high thermal shock resistance, namely excellent spalling resistance. Further, chemical stability is high, and reactivity with a high-temperature glass or stainless steel plate is low. As described above, the disc roll is required to be small in deformation and changes in dimension at high temperatures, and little in thermal deterioration, which induces powder omission. The crystalline cordierite is excellent in spalling resistance, compared to conventional disc rolls, so that it is sufficiently usable even at temperatures as high as 1300°C, such as the case of conveyance of the stainless steal. Moreover, the high-temperature stainless steal plate is liable to produce iron oxide on a surface thereof. However, the crystalline cordierite is low in reactivity, so that damage of the roll surface caused by this iron oxide is little, resulting in long life.

### EXAMPLES

The present invention will be illustrated in more detail below with reference to the following Examples and Comparative Examples, but the invention should not be construed as being limited thereto.

### EXAMPLES 1A to 6A and COMPARATIVE EXAMPLES 1A to 2A

An aqueous slurry was prepared in which raw materials shown in Table 1A were compounded, and a disc member base material, the base material having a size of 100 mm X 100 mm X 6 mm after drying, was made by an ordinary paper-making process. The formulation of Comparative Example 1A is in accordance with patent document 1 by the present inventors. Each disc member base material thus obtained was subjected to the following measurements and tests:

### Measurement of Rate of Thermal Change

Each disc member base material was kept for 180 minutes in a heating furnace maintained at 900°C or 1300°C, and the rate of dimensional change (rate of thermal change) between before and after heating. The results are shown in Table 1A.

### Wear Resistance Test

Each disc member base material was heated under the same conditions as the above-mentioned measuring conditions of the rate of thermal change, and allowed to cool to room temperature, followed by rubbing with hand. The surface wear resistance was evaluated by touch at that time. Evaluation criteria are as follows:
A: No transfer or no powder omission is observed.
B: A powder is transferred to hand by rubbing.
C: Powder omission heavily occurs by rubbing.
D: Powder omission particularly heavily occurs by rubbing.
The ratings A and B are acceptable for practical use. The results are shown in Table 1A.

### Hot Wear Test

Disc members each having an outer diameter of 80 mm and an inner diameter of 30 mm were stamped out from each disc member base material, and fitted together on an iron shaft having a diameter of 30 mm and a length of 100 mm by insertion to prepare a column-shaped disc roll as shown in Fig. 1. Further, disc members were similarly stamped out from the disc member base material of the formulation of Comparative Example 1A, and a column-shaped disc roll was prepared. Then, this disc roll was placed in an experimental furnace, and the furnace temperature was maintained at a temperature of 1050 to 1300°C. The disc roll was continuously rotated for 5 hours, with a 30-mm diameter round stainless steal bar brought into contact therewith. The wear loss was determined from a change in outer diameter between before and after the test. The results are shown in Table 1A.

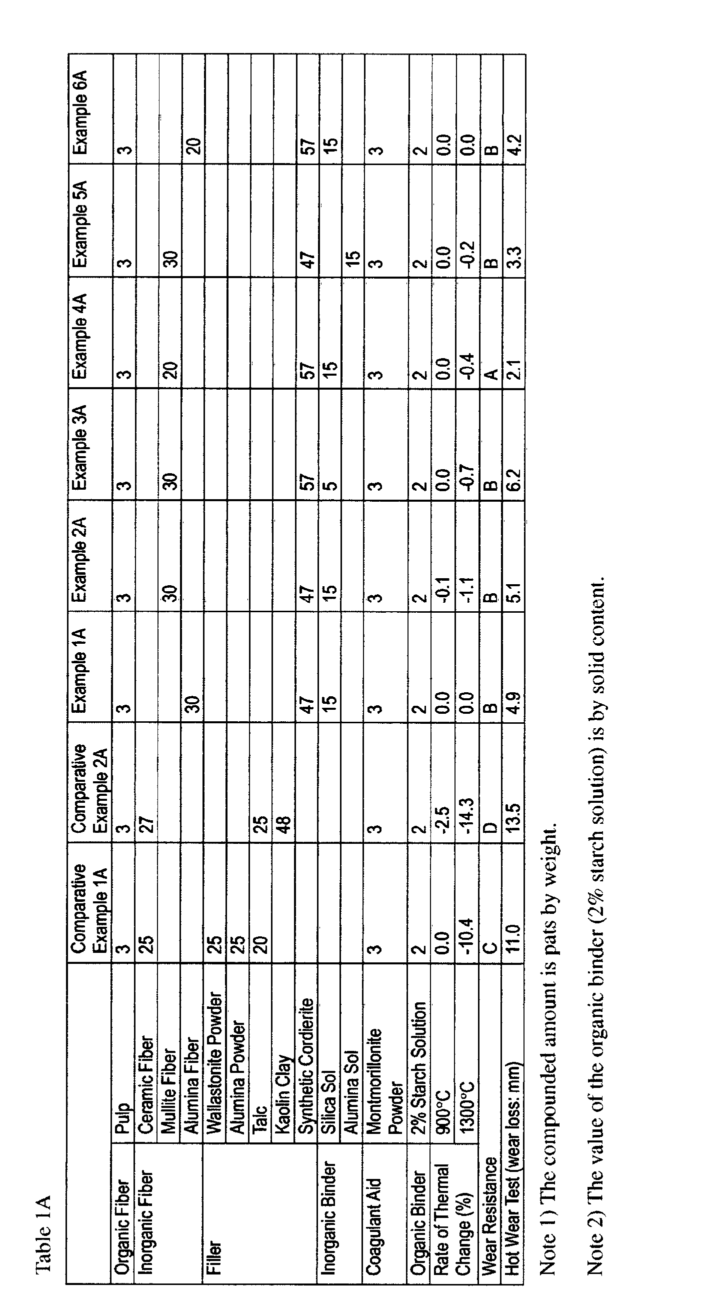

As shown in Table 1A, all the base materials for disc rolls of Examples each containing the synthetic cordierite are small in changes in dimension even at temperatures as high as 1300°C, and also excellent in wear resistance. In contrast, the disc member base material of Comparative Example 1A is not inferior in changes in dimension at 900°C to the base materials for disc rolls of Examples, but substantially increases in the rate of thermal change at 1300°C. Further, the disc member base material of Comparative Example 2A increases in the rate of thermal change even at 900°C, and markedly increases in the rate of thermal change at 1300°C. This reveals that the base materials for disc rolls of the first embodiment are excellent in heat resistance.

### EXAMPLES 1B to 17B and COMPARATIVE EXAMPLE 1B

An aqueous slurry was prepared in which raw materials shown in Table 1B were compounded, and a disc member base material, the base material having a size of 100 mm X 100 mm X 6 mm after drying, was made by an ordinary paper-making process. The formulation of Comparative Example 1B is in accordance with patent document 1 by the present inventors. Then, each disc member base material was subjected to the following measurements and tests:

### Measurement of Rate of Thermal Change

Each disc member base material was kept for 180 minutes in a heating furnace maintained at 900°C or 1300°C, and the rate of dimensional change (rate of thermal change) between before and after heating. The results are shown in Table 1B.

### Wear Resistance Test

Each disc member base material was heated under the same conditions as the above-mentioned measuring conditions of the rate of thermal change, and allowed to cool to room temperature, followed by rubbing with hand. The surface wear resistance was evaluated by touch at that time. Evaluation criteria are as follows:
A: No transfer or no powder omission is observed.
B: A powder is transferred to hand by rubbing.
C: Powder omission heavily occurs by rubbing.
The ratings A and B are acceptable for practical use. The results are shown in Table 1B.

### Hot Wear Test

Annular disc members each having an outer diameter of 80 mm and an inner diameter of 30 mm were stamped out from each disc member base material, and fitted together on an iron rotary shaft having a diameter of 30 mm and a length of 100 mm by insertion to prepare a column-shaped disc roll as shown in Fig. 1. Further, annular discs were similarly stamped out from the disc member base material of the formulation of Comparative Example 1, and a column-shaped disc roll was prepared. Then, this disc roll was placed in an experimental furnace, and the furnace temperature was maintained at a temperature of 1050 to 1300°C. The disc roll was continuously rotated for 5 hours, with a 30-mm diameter round stainless steal bar brought into contact therewith. The wear loss was determined from a change in outer diameter between before and after the test. The results are shown in Table 1B.

### Measurement of the Maximum Percentage of Contraction in Softening and Softening Initiation Temperature

Using a thermomechanical characteristic-measuring apparatus (TMA-50 manufactured by Shimadzu Corporation), the maximum percentage of contraction in softening was measured. In this measuring apparatus, a sample is placed on the bottom of a housing, and a constant load is applied to the sample from a load-generating unit through a probe while heating it in a heating furnace. Dimensional changes of the sample at that time are detected with a position-detecting unit to determine the rate of thermal expansion or the rate of thermal change. Further, the softening initiation temperature was measured at the same time. The result thereof are shown in Table 1B.

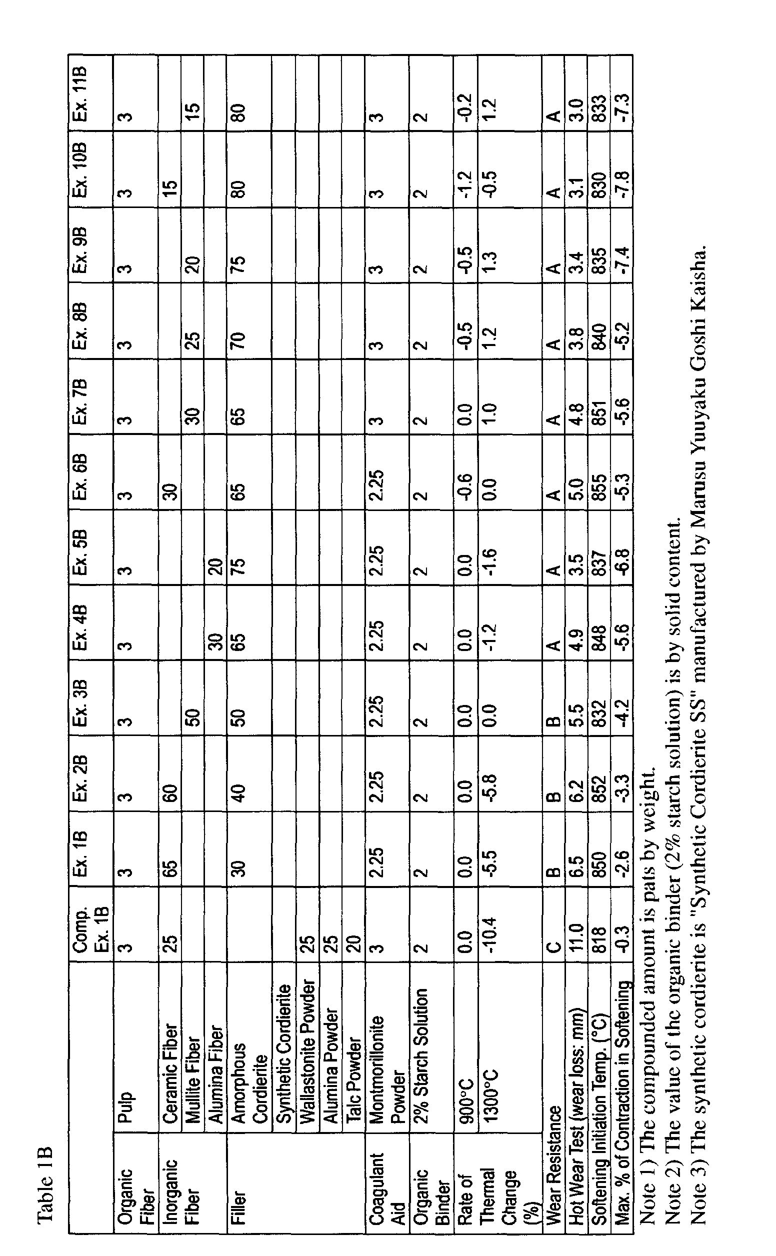

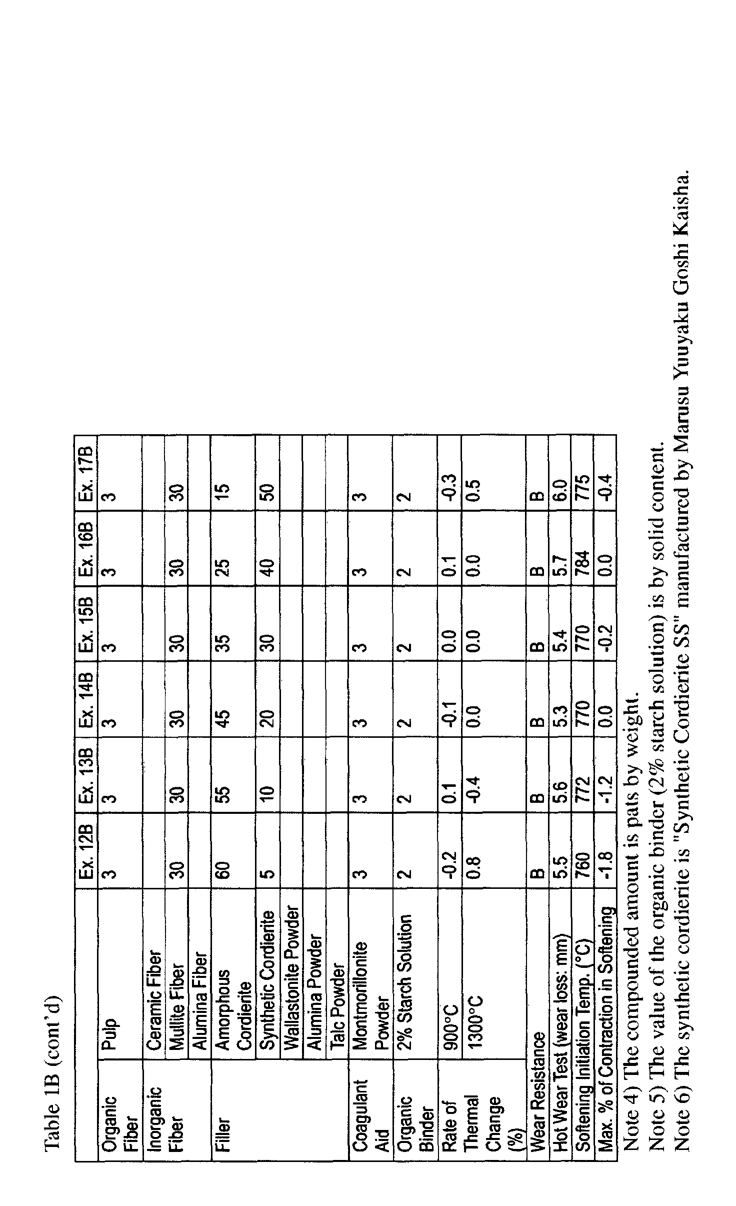

As shown in Table 1B, all the base materials for disc rolls of Examples 1B to 11B each containing the amorphous cordierite in an amount of 30 to 80% by weight are small in changes in dimension even at temperatures as high as 1300°C, and also excellent in wear resistance. Further, the base materials for disc rolls of Examples 12B to 17B in which the amorphous cordierite is partly replaced by the synthetic cordierite is also improved in the maximum percentage of contraction in softening. The maximum percentage of contraction in softening decreases with an increase in the ratio of the synthetic cordierite. In contrast, the disc member base material of Comparative Example 1B is not inferior in changes in dimension at 900°C to the base materials for disc rolls of Examples, but substantially increases in the rate of thermal change at 1300°C. This reveals that the base materials for disc rolls of the second embodiment are excellent in heat resistance.

### EXAMPLES 1C to 6C and COMPARATIVE EXAMPLES 1C and 2C

An aqueous slurry was prepared in which raw materials shown in Table 1C were compounded, and a disc member base material, the base material having a size of 100 mm X 100 mm X 6 mm after drying, was made by an ordinary paper-making process. In Examples 2C to 6C, "Compounded Cordierite AF-2" manufactured by Marusu Yuuyaku Goshi Kaisha was used. Then, the base materials for disc rolls in Examples were burned in a heating furnace of 1350°C to crystallize the compounded cordierite. The formulation of Comparative Example 1C is in accordance with patent document 1 by the present inventors. Each disc member base material thus obtained was subjected to the following measurement and tests:

### Measurement of Rate of Thermal Change

Each disc member base material was kept for 180 minutes in a heating furnace maintained at 900°C or 1300°C, and the rate of dimensional change (rate of thermal change) between before and after heating. The results are shown in Table 1C.

### Wear Resistance Test

Each disc member base material was heated under the same conditions as the above-mentioned measuring conditions of the rate of thermal change, and allowed to cool to room temperature, followed by rubbing with hand. The surface wear resistance was evaluated by touch at that time. Evaluation criteria are as follows:
A: No transfer or no powder omission is observed.
B: A powder is transferred to hand by rubbing.
C: Powder omission occurs by rubbing.
D: Powder omission heavily occurs by rubbing.

The ratings A and B are acceptable for practical use. The results are shown in Table 1C.

### Hot Wear Test

Annular disc members each having an outer diameter of 80 mm and an inner diameter of 30 mm were stamped out from each disc member base material, and fitted together on an iron shaft having a diameter of 30 mm and a length of 100 mm by insertion to prepare a column-shaped disc roll as shown in Fig. 1. Further, disc members were similarly stamped out from the disc member base material of the formulation of Comparative Example 1C, and a column-shaped disc roll was prepared. Then, this disc roll was placed in an experimental furnace, and the furnace temperature was maintained at a temperature of 1050 to 1300°C. The disc roll was continuously rotated for 5 hours, with a 30-mm diameter round stainless steal bar brought into contact therewith. The wear loss was determined from a change in outer diameter between before and after the test. The results are shown in Table 1C.

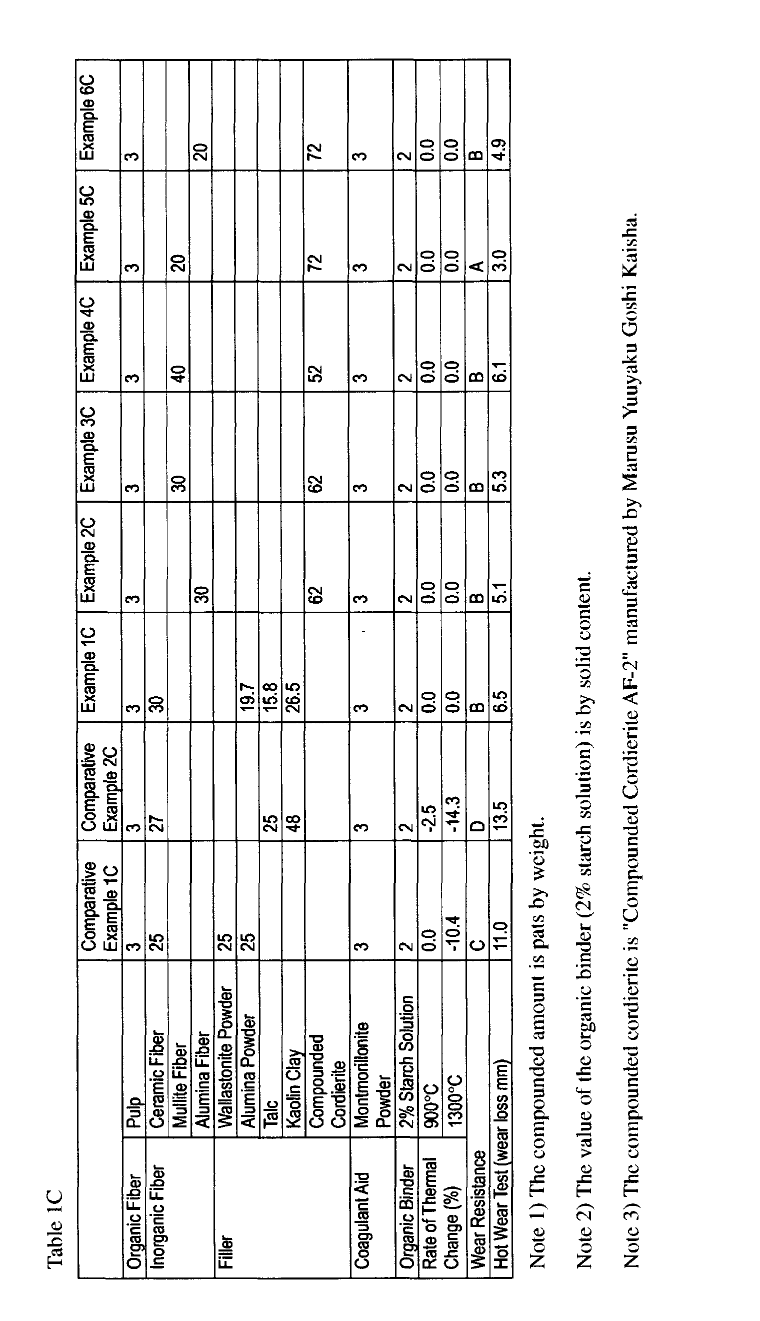

As shown in Table 1C, all the base materials for disc rolls of Examples each containing the compounded cordierite within the range of the invention are small in changes in dimension even at temperatures as high as 1300°C, and also excellent in wear resistance. In contrast, the disc member base material of Comparative Example 1C is not inferior in changes in dimension at 900°C to the base materials for disc rolls of Examples, but substantially increases in the rate of thermal change at 1300°C. This reveals that the base materials for disc rolls of the invention are excellent in heat resistance.

As described above, according to the first embodiment, the disc roll is obtained which is markedly excellent in heat resistance, compared to conventional ones, and is also sufficiently usable, for example, for conveyance of a stainless steel plate heated in an annealing furnace at about 1300°C.

While the present invention has been described in detail and with reference to specific embodiments thereof, it will be apparent to one skilled in the art that various changes and modifications can be made therein without departing from the spirit and scope thereof.

The present application is based on Japanese patent application Nos. 2003-036737 (filed February 14, 2003), 2003-058845 (filed March 5, 2003), 2003-071971 (filed March 17, 2003) and 2004-020915 (filed January 29, 2004), the contents thereof being herein incorporated by reference.

## Claims

1. A disc roll comprising:
a plurality of annular disc members each defining a hole and having a peripheral surface; and
a rotary shaft fitted into the holes of said annular disc members by insertion, whereby the peripheral surfaces of said disc members serve as a conveying surface of the disc roll,
wherein said disc members contain a crystalline cordierite-containing ceramic powder, an inorganic fiber and a binder.

2. The disc roll according to claim 1, wherein said disc members contain the crystalline cordierite-containing ceramic powder, the inorganic fiber and the binder in amounts of 20 to 80% by weight, 5 to 50% by weight and 5 to 40% by weight, respectively, based on the total weight of the disc members.

3. A method for producing a disc roll, comprising the steps of:
forming into a plate form a slurry raw material containing a crystalline cordierite-containing ceramic powder, an inorganic fiber and a binder to obtain a disc member base material;
stamping out a plurality of annular disc members each defining a hole and having a peripheral surface, from said disc member base material; and
fitting said plurality of annular disc members on a rotary shaft by insertion through the holes and fixing said disc members to obtain a disc roll.

4. The method for producing a disc roll according to claim 3, wherein said formation of the disc member base material is conducted by a paper-making process.

5. A plate-shaped disc member base material, comprising a crystalline cordierite-containing ceramic powder, an inorganic fiber and a binder.

6. The disc member base material according to claim 5, containing the crystalline cordierite-containing ceramic powder, the inorganic fiber and the binder in amounts of 20 to 80% by weight, 5 to 50% by weight and 5 to 40% by weight, respectively, based on the weight of the disc member base material.

7. A disc roll comprising:
a plurality of annular disc members each defining a hole and having a peripheral surface; and
a rotary shaft fitted into the holes of said annular disc members by insertion, whereby the peripheral surfaces of said disc members serve as a conveying surface of the disc roll,
wherein said disc members contain an inorganic fiber and an amorphous cordierite.

8. The disc roll according to claim 7, wherein said disc members contain the inorganic fiber and the amorphous cordierite in amounts of 5 to 50% by weight and 20 to 80% by weight, respectively, based on the total amount of the disc members.

9. The disc roll according to claim 7 or 8, wherein the amorphous cordierite is partly replaced by a synthetic cordierite.

10. The disc roll according to claim 9, wherein said disc members contain the amorphous cordierite and the synthetic cordierite in a mixing ratio of the former to the latter of 12:1 to 3:10 by weight.

11. The disc roll according to any one of claims 7 to 10, wherein said disc members comprises a crystallized product of the amorphous cordierite exists at least in their surface layer portions.

12. A method for producing a disc roll, comprising the steps of:
forming into a plate form a slurry raw material containing an inorganic fiber and an amorphous cordierite to obtain a disc member base material;
stamping out a plurality of annular disc members each defining a hole and having a peripheral surface, from said disc member base material; and
fitting said plurality of annular disc members on a rotary shaft by insertion through the holes and fixing said disc members to obtain a disc roll.

13. The method for producing the disc roll according to claim 12, wherein said slurry raw material further contains a synthetic cordierite.

14. The method for producing a disc roll according to claim 12 or 13, wherein said slurry raw material further contains an organic fiber and an organic binder, and said formation of the disc member base material is conducted by a paper-making process.

15. The method for producing a disc roll according to any one of claims 12 to 14, further comprising a step of crystallizing the amorphous cordierite existing at least in surface layer portions of the peripheral surfaces of said disc members by conveying a high temperature article with the disc roll.

16. A plate-shaped disc member base material, comprising an inorganic fiber and an amorphous cordierite.

17. The disc member base material according to claim 16, containing the inorganic fiber and the amorphous cordierite in amounts of 5 to 50% by weight and 20 to 80% by weight, respectively, based on the weight of the disc member base material.

18. The disc member base material according to claim 16 or 17, the amorphous cordierite is partly replaced by a synthetic cordierite.

19. A disc roll comprising:
a plurality of annular disc members each defining a hole and having a peripheral surface; and
a rotary shaft fitted into the holes of said annular disc members by insertion, whereby the peripheral surfaces of said disc members serve as a conveying surface of the disc roll,
wherein said disc members is obtained by a process comprising subjecting a disc member base material to crystallization, said disc member base material containing:
a mixture comprising a magnesium oxide source, an aluminum oxide source and a silicon oxide source in a weight ratio of 2:2:5; and
an inorganic fiber.

20. The disc roll according to claim 19, wherein said disc members contain the mixture and the inorganic fiber in amounts of 20 to 80% by weight and 5 to 50% by weight, respectively, based on the total weight of the disc members.

21. A method for producing a disc roll, comprising the steps of:
forming into a plate form a slurry raw material containing a mixture comprising a magnesium oxide source, an aluminum oxide source and a silicon oxide source in a weight ratio of 2:2:5 and an inorganic fiber to obtain a disc member base material;
heating said disc member base material to crystallize the mixture;
stamping out a plurality of annular disc members each defining a hole and having a peripheral surface, from said crystallized disc member base material; and
fitting said plurality of annular disc members on a rotary shaft by insertion through the holes and fixing said disc members to obtain a disc roll.

22. The method for producing the disc roll according to claim 21, wherein said slurry raw material further contains an organic fiber and an organic binder, and said formation of the disc member base material is conducted by a paper-making process.

23. A plate-shaped disc member base material, containing:
a mixture comprising a magnesium oxide source, an aluminum oxide source and a silicon oxide source in a wcight ratio of 2:2:5; and
an inorganic fiber.

24. The disc member base material according to claim 23, containing the mixture and the inorganic fiber in amounts of 20 to 80% by weight and 5 to 50% by weight, respectively, based on the weight of the disc member base material.

25. A method for producing a disc member base material, which comprises subjecting a slurry raw material to a paper-making process.

26. The method for producing a disc member base material according to claim 25, wherein said slurry raw material comprises a crystalline cordierite-containing ceramic powder, an inorganic fiber and a binder.

27. The method for producing a disc member base material according to claim 25, wherein said slurry raw material comprises an inorganic fiber, an amorphous cordierite, an organic fiber and an organic binder.

28. The method for producing a disc member base material according to claim 25, wherein said slurry raw material comprises:
a mixture comprising a magnesium oxide source, an aluminum oxide source and a silicon oxide source in a weight ratio of 2:2:5;
an inorganic fiber;
an organic fiber; and
an organic binder.
